# FASCICULE DE BREVET EUROPEEN

(11) **EP 4 262 382 B1**
(45) Date de publication et mention de la délivrance du brevet: **11.12.2024**
(21) Numéro de dépôt: 21852037.7
(22) Date de dépôt: 20.12.2021
(51) Int. Cl.: A01M 7/00, A01N 63/12, A01N 63/14, B05B 7/08, B05B 7/24, B05B 7/04

(54) **SYSTEME DE PULVERISATION D'UNE COMPOSITION D'AGENTS DE CONTRÔLE BIOLOGIQUE VIVANTS**
SYSTEM ZUM SPRÜHEN EINER ZUSAMMENSETZUNG AUS LEBENDEN BIOLOGISCHEN BEKÄMPFUNGSMITTELN
SYSTEM FOR SPRAYING A COMPOSITION OF LIVE BIOLOGICAL CONTROL AGENTS

(30) Priorité: 18.12.2020 FR 2013693
(43) Date de publication de la demande: 25.10.2023
(73) Titulaire: Bioline Agrosciences France, 75016 Paris (FR)
(72) Inventeur: FRANDON, Jacques, 06600 Antibes (FR); MAIGNET, Pascal, 06460 Saint Vallier de Thiey (FR)
(74) Mandataire: Regimbeau
(86) Numéro de dépôt international: PCT/FR2021/052405
(87) Numéro de publication internationale: WO 2022/129818

(56) Documents cités:
- EP-A1- 3 527 072
- US-A- 5 735 459

## Description

### DOMAINE DE L'INVENTION

L'invention concerne un système pour la dispersion d'agents de contrôle biologique vivants, par exemple de la famille des phytoséides du genre *Phytoseiulus.*

### ETAT DE LA TECHNIQUE

Lors de la dispersion des acariens prédateurs du genre *Phytoseiulus,* sont traditionnellement utilisées des bouteilles contenant un support solide inerte, tel que de la vermiculite, dans lequel se déplacent les acariens. Les acariens se déplace naturellement vers le haut du conditionnement et cela aboutit à une répartition très hétérogène des acariens lors de leur sortie des bouteilles.

Il est également connu de déposer directement le support sur des végétaux objet du contrôle biologique. Cependant, le support peut tomber des végétaux, entraînant une perte des acariens prédateurs sur les végétaux, et ainsi une diminution de l'efficacité de cette méthode de contrôle biologique.

Il existe donc un besoin d'une autre méthode de disperser des acariens vivants et mobiles en milieu aqueux sur des végétaux ou supports de cultures dans le cadre d'une stratégie de biocontrôle.

Toutefois, les acariens du genre *Phytoseiulus* sont connus pour être fragiles, strictement aériens et inadaptés au milieu aqueux, par exemple lorsqu'ils se trouvent au niveau du sol, car ils ne fréquentent que la partie aérienne des plantes où se trouvent leurs proies.

Le document US 5 735 459 A décrit un support configuré pour mettre en suspension des agents de contrôle biologique, le support présentant des propriétés adhésives réglables de sorte à déposer et maintenir les agents de contrôle biologique dans une zone cible de la plante traitée.

### EXPOSE DE L'INVENTION

Un but de l'invention est de proposer un système pour disperser des agents de contrôle biologique vivants de manière homogène dans des cultures.

Ce but est atteint dans le cadre de la présente invention grâce à un système de dispersion d'agents de contrôle biologique vivants, comprenant :
- un réservoir d'agents de contrôle biologique vivants en phase liquide,
- une source d'air sous pression,
- une buse, la buse étant reliée au réservoir d'agents de contrôle biologique par une conduite d'agents de contrôle biologique, et à la source d'air sous pression par une conduite d'air sous pression, la buse comprenant une embouchure de pulvérisation,

la conduite d'agents de contrôle biologique présentant une sortie de phase liquide adaptée pour permettre à un jet de phase liquide de sortir de l'embouchure selon une direction principale, et la conduite d'air sous pression présentant au moins une sortie d'air,
l'embouchure comprenant une paroi, la sortie de phase liquide étant définie par un orifice sur la paroi de l'embouchure,
la ou les sorties d'air étant agencées sur la paroi de l'embouchure, la forme de la paroi étant configurée pour diriger un écoulement d'air principal sortant de la ou des sorties d'air de manière convergente vers le jet de phase liquide, l'écoulement d'air principal présentant préférentiellement une symétrie axiale par rapport à la direction principale.

L'invention est avantageusement complétée par les caractéristiques suivantes, prises individuellement ou en l'une quelconque de leurs combinaisons techniquement possibles :
- la buse comprend au moins deux sorties d'air agencées symétriquement par rapport à la direction principale, la forme de la paroi étant configurée pour diriger un premier écoulement d'air sortant d'une des sorties d'air vers le jet de phase liquide, et pour diriger un deuxième écoulement d'air sortant de l'autre sortie d'air vers le jet de phase liquide, le premier écoulement d'air et le deuxième écoulement d'air étant symétriques par rapport à la direction principale,
- le système comprend un réservoir d'enzymes en phase liquide, le réservoir d'enzymes étant relié fluidiquement à la conduite d'agents de contrôle biologique, préférentiellement par un mélangeur adapté pour mélanger des agents de contrôle biologique vivants en phase liquide et une solution d'enzymes,
- le système comprend des moyens de mise sous pression du réservoir d'agents de contrôle biologique et/ou du réservoir d'enzymes, adaptés à entraîner un écoulement depuis le réservoir d'agents de contrôle biologique et/ou depuis le réservoir d'enzymes vers la sortie de phase liquide,
- l'orifice présente un diamètre supérieur à 1 mm, et préférentiellement supérieur à 1,5 mm,
- les moyens de mise sous pression sont mis en oeuvre par une conduite de mise sous pression reliant la conduite d'air sous pression et le réservoir d'agents de contrôle biologique, et/ou reliant la conduite d'air sous pression et le réservoir d'enzymes,
- le réservoir d'agents de contrôle biologique comprend une composition aqueuse, et des agents de contrôle biologiques sont dispersés dans la composition aqueuse,
- la composition aqueuse comprend un gel préparé à partir d'un ou plusieurs épaississants et/ou gélifiants et d'une solution aqueuse, les agents de contrôle biologique vivants étant dispersés de façon homogène dans le gel, lesdits épaississants et/ou gélifiants étant non toxiques pour lesdits agents de contrôle biologique et ledit gel présentant une viscosité dynamique à gradient de vitesse nulle comprise entre 1 et 30 000 mPa.s,
- les agents de contrôle biologique vivants sont mobiles,
- les agents de contrôle biologique vivants sont choisis dans le groupe constitué d'acariens et/ou d'insectes prédateurs d'acariens,
- les agents de contrôle biologique vivants sont des acariens de la famille des phytoséides du genre Phytoseiulus,
- les agents de contrôle biologique vivants sont des insectes de type *Chrysoperla* prédateurs d'insectes ravageurs, notamment de pucerons,

Un autre objet de l'invention est une méthode de dispersion d'agents de contrôle biologique vivants, préférentiellement mobiles, la méthode comprenant une étape de pulvérisation d'une composition aqueuse d'agents de contrôle biologique vivants par un système selon un mode de réalisation de l'invention, dans laquelle on entraîne un écoulement d'air principal depuis la source d'air sous pression jusqu'à l'embouchure de pulvérisation, on entraîne un écoulement d'une composition aqueuse comprenant les agents de contrôle biologique vivants en phase liquide jusqu'à l'orifice, une vitesse moyenne de l'écoulement d'air dans la conduite d'air étant adaptée à pulvériser la composition aqueuse par cisaillement de la composition aqueuse par l'écoulement d'air.

Avantageusement, le diamètre de l'orifice et la vitesse moyenne de l'écoulement de composition aqueuse sont adaptés pour que le jet de phase liquide ne soit pas pulvérisé en sortie de l'orifice.

Avantageusement, la composition aqueuse comprenant les agents de contrôle biologique est pulvérisée seulement par l'écoulement d'air principal après être sortie de l'orifice.

Avantageusement, dans une méthode selon un mode de réalisation de l'invention, le système comprend des moyens de mise sous pression du réservoir d'agents de contrôle biologique adaptés à entraîner un écoulement depuis le réservoir d'agents de contrôle biologique et/ou depuis le réservoir d'enzymes vers la sortie de phase liquide, et on contrôle les moyens de mise sous pression de manière à imposer une pression strictement inférieure à 3 bar dans le réservoir d'agents de contrôle biologique, et préférentiellement inférieure à 0,5 bars.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] La figure 1 illustre schématiquement un système pour la dispersion d'agents de contrôle biologique vivants selon un mode de réalisation de l'invention.
[Fig. 2] La figure 2 illustre le taux de survie d'agents de contrôle biologique vivants après avoir été dispersés par un système selon un mode de réalisation de l'invention et par d'autres systèmes.
[Fig. 3] La figure 3 illustre le taux de survie d'agents de contrôle biologique vivants après avoir été dispersés par un système selon quatre modes de réalisation de l'invention.

Sur l'ensemble des figures, les éléments similaires portent des références identiques.

### DEFINITION

Dans l'ensemble des modes de réalisation de l'invention décrits, on entend par « bar » une unité de pression exactement égale à 100 000 pascals, dont le zéro correspond à la pression atmosphérique. Le « bar » ainsi défini est également appelé « bar jauge » (noté barg), dont la définition est strictement identique. On n'entend pas par « bar » une unité de pression absolue, noté « para », dont le zéro est représentatif du vide absolu.

### DESCRIPTION DETAILLEE DE L'INVENTION

### Architecture générale du système

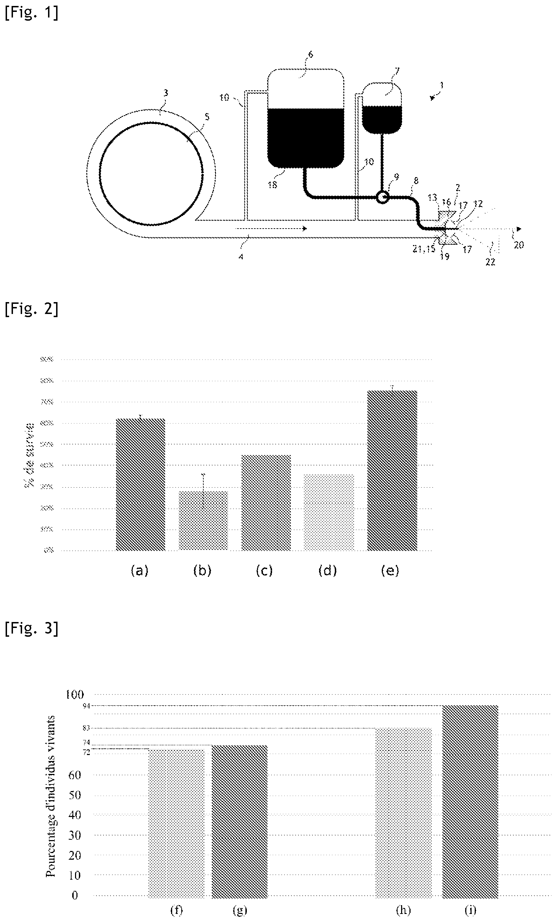

En référence à la figure 1, un système 1 de dispersion d'agents de contrôle biologiques vivants comprend un réservoir d'agents de contrôle biologique 6 vivants en phase liquide. Le réservoir d'agents de contrôle biologique 6 peut présenter un volume supérieur à deux litres, préférentiellement supérieur à cinq litres, notamment supérieur à 10 litres. Le réservoir d'agents de contrôle biologique 6 peut préférentiellement comprendre une composition aqueuse 18, la composition aqueuse 18 comprenant des agents de contrôle biologique vivants dispersés.

Le système 1 comprend également une source d'air 3 sous pression. La source d'air 3 sous pression peut préférentiellement être mise en oeuvre par une turbine de ventilation 5, ce qui permet au système 1 d'être portable tout en permettant à la source d'air 3 sous pression de produire de l'air présentant une pression supérieure à 1 bar, préférentiellement supérieure à 2 bars.

Le système 1 comprend une buse 2. La buse 2 est reliée au réservoir d'agents de contrôle biologique 6 par une conduite d'agents de contrôle biologique 8 en phase liquide. La conduite d'agents de contrôle biologique 8 est préférentiellement un tube flexible. La conduite d'agents de contrôle biologique 8 présente une sortie de phase liquide 15.

La buse 2 est également reliée à la source d'air 3 sous pression par une conduite d'air 4 sous pression. La conduite d'air 4 sous pression est préférentiellement un tube flexible. La conduite d'air 4 sous pression présente une sortie d'air 16.

La buse 2 comprend une embouchure 13 de pulvérisation. La conduite d'agents de contrôle biologique 8 présente une sortie de phase liquide 15 adaptée pour permettre à un jet de phase liquide 12 de sortir de l'embouchure 13 selon une direction principale 20. Par « jet de phase liquide », on entend un écoulement continu de phase liquide entouré par une phase gazeuse, qui n'est pas pulvérisé en gouttelettes. Directement après la sortie de la phase liquide 15 de l'orifice 21, lors de l'utilisation du système, le jet de phase liquide 12 n'est pas encore pulvérisé. La conduite d'air 4 sous pression présente au moins une sortie d'air 16. La source d'air 3 sous pression peut être configurée pour que l'air, au niveau de l'embouchure 13, et préférentiellement au niveau de la ou des sorties d'air 16, présente une vitesse comprise entre 5 m/s et 30 m/s, notamment comprise entre 10 m/s et 25 m/s. L'embouchure 13 comprend une paroi 19. La sortie de phase liquide 15 est définie par un orifice 21 sur la paroi 19 de l'embouchure 13. La ou les sorties d'air 16 sont également agencées sur la paroi 19 de l'embouchure 13. La forme de la paroi 19 est configurée pour diriger un écoulement d'air principal 17 sortant de la ou des sorties d'air 16 de manière convergente vers le jet de phase liquide 12, l'écoulement d'air principal 17 présentant préférentiellement une symétrie axiale par rapport à la direction principale.

Ainsi, une composition aqueuse comprenant des agents de contrôle biologique vivants peut être majoritairement pulvérisée, préférentiellement uniquement pulvérisée, par l'écoulement d'air venant à la rencontre du jet de phase liquide comprenant la composition aqueuse, à la sortie de phase liquide 15, un cisaillement étant exercé à l'interface de la composition aqueuse. Ce cisaillement entraîne le fractionnement du jet et donc de la composition aqueuse en très petites gouttelettes. Un jet pulvérisé 22 est ainsi produit en sortie de buse 2.

Comme ce cisaillement est mis en oeuvre par de l'air à l'interface de la composition, la composition peut être pulvérisée en augmentant significativement le taux de survie des agents de contrôle biologique vivants de la composition aqueuse. Les inventeurs ont découvert que le passage des agents de contrôle biologique vivants par une buse entraînant la pulvérisation par contrainte mécanique d'une partie solide est néfaste à leur survie après dispersion, en raison des risques de blessures des agents, notamment quand la pression imposée sur la composition aqueuse est supérieure à 0,5 bar. La buse 2 selon un mode de réalisation de l'invention permet d'éviter cette cause de mortalité des agents de contrôles biologique vivants.

En référence à la figure 1, la buse 2 comprend au moins deux sorties d'air 16 agencées symétriquement par rapport à la direction principale 20, la forme de la paroi 19 étant configurée pour diriger un premier écoulement d'air sortant d'une des sorties d'air 16 vers le jet de phase liquide 12, et pour diriger un deuxième écoulement d'air sortant de l'autre sortie d'air 16 vers le jet de phase liquide 12, le premier écoulement d'air et le deuxième écoulement d'air, formant l'écoulement d'air principal 17, étant symétriques par rapport à la direction principale 20. Ainsi, il est possible de pulvériser le jet 12 de phase liquide comprenant la composition aqueuse majoritairement par contact air/liquide, et préférentiellement uniquement par contact air/liquide, selon une direction déterminée par la position dans l'espace de la buse 2.

En variante, la sortie d'air 16 peut être définie par une couronne entourant complètement l'orifice 21. En variante, la paroi peut présenter quatre sorties d'air ou un nombre supérieur et paire de sorties d'air 16, par exemple huit sorties d'air 16, agencées de manière symétrique autour de l'orifice 21.

Préférentiellement, la forme de la paroi peut être configurée pour que la direction de l'écoulement d'air principal 17 forme un angle avec la direction principale 20 compris entre 30 et 60 degrés, et préférentiellement compris entre 40 et 50 degrés. Ainsi, la pulvérisation de la composition aqueuse peut avoir lieu à la fois par le cisaillement de l'écoulement d'air au contact de l'écoulement de composition aqueuse et par l'entrée de l'écoulement d'air dans l'écoulement de composition aqueuse, et par la convergence des jets d'air vers l'écoulement de composition aqueuse.

Le diamètre de l'orifice 21 est configuré pour que, pour un débit prédéterminé de l'écoulement de composition aqueuse, ou pour une vitesse moyenne prédéterminée de l'écoulement de composition aqueuse 18 dans la conduite d'agents de contrôle biologique 8, la sortie du jet de phase liquide, comprenant la composition aqueuse 18, en dehors de l'embouchure 13 n'entraîne pas de pulvérisation de la composition aqueuse. Ainsi, les agents de contrôle biologique vivants peuvent sortir de la buse 2 sans subir une contrainte mécanique assez forte pour les blesser lors du passage par l'orifice 21. En effet, la pulvérisation est entraînée physiquement à la fois par un diamètre de l'orifice suffisamment petit et par une vitesse de l'écoulement suffisamment élevée. Ainsi, l'homme du métier, pour une vitesse d'écoulement prédéterminée, saura adapter le diamètre de l'orifice de telle manière, c'est-à-dire assez élevé, pour que le jet de phase liquide ne soit pas majoritairement pulvérisé par l'orifice 21. De plus, le diamètre de l'orifice 21 est choisi en fonction de la taille des agents de contrôle biologique vivant. Préférentiellement, le diamètre de l'orifice 21 est choisi supérieure à deux fois, notamment supérieur à trois fois la taille de l'agent de contrôle biologique vivant. Ainsi, l'agent de contrôle biologique vivant subit un cisaillement limité, ce qui permet d'augmenter la survie des agents de contrôle biologique vivant en sortie du système 1 lors de la dispersion des agents de contrôle biologique vivants. Pour les vitesses d'écoulement préférentielles des modes de réalisation de l'invention, l'orifice 21 présente un diamètre supérieur à 1 mm, et préférentiellement à 1,5 mm. Ainsi, la composition aqueuse n'est pas majoritairement pulvérisée en passant par l'orifice 21, mais principalement lors du cisaillement avec l'écoulement d'air 17. Le réservoir d'agents de contrôle biologique 6 peut être mis sous pression, préférentiellement par la source d'air 3 sous pression par l'intermédiaire d'une conduite de mise sous pression 10, de manière à entraîner un écoulement de composition aqueuse 18 à l'orifice 21 compris entre 2 mL/s et 4,5 mL/s.

### Composition d'agents de contrôle biologique

La composition aqueuse pulvérisable comprend des agents de contrôle biologique vivants dispersés de façon homogène dans un gel préparé à partir d'un ou plusieurs épaississants et/ou gélifiants et d'une solution aqueuse. Les épaississants et/ou gélifiants sont non toxiques pour lesdits agents de contrôle biologique et ledit gel présente une viscosité dynamique à gradient de vitesse nulle comprise entre 1 et 30 000 mPa.s.

De préférence, ledit gel présente une viscosité dynamique à gradient de vitesse nulle comprise entre 10 et 25 000 mPa.s, de manière encore préférentielle comprise entre 2 et 5 000 mPa.s, de manière encore préférentielle comprise entre 60 et 4 500 mPa.s, de manière encore préférentielle comprise entre 80 et 150 mPa.s.

De préférence, les agents de contrôle biologique vivants sont choisis parmi des agents de contrôle biologique vivants mobiles. Par « mobile », on entend que l'agent de contrôle biologique vivant existe sous une forme qui lui permet, au moment de l'utilisation du système, d'être mobile dans l'espace, et particulièrement dans une culture. En effet, les inventeurs ont découvert que les agents de contrôle biologique vivants mobiles sont particulièrement affectés par une pulvérisation par cisaillement par un matériau solide. Ainsi, une pulvérisation entraînée majoritairement par un cisaillement entre l'air et la composition aqueuse permet de pulvériser des agents de contrôle biologique vivants mobiles avec un taux de survie élevée.

De préférence, les agents de contrôle biologique vivants peuvent être choisis dans le groupe constitué d'acariens et/ou d'insectes prédateurs de ravageurs de culture, préférentiellement d'acariens.

De préférence, les agents de contrôle biologique vivants sont des insectes de type *Chrysoperla* prédateurs de ravageurs de culture, notamment de pucerons . Les agents de contrôle biologique vivants peuvent être sous la forme d'oeufs.

Selon un mode de réalisation, lesdits agents de contrôle biologique vivants sont des acariens de la famille des Phytoseiidae ou des acariens prédateurs du sol, de préférence *Hypoaspis miles ; Macrocheles robustulus ; Gaeolaelaps acule;fer.*

De préférence, lesdits agents de contrôle biologique de la famille des Phytoseiidae sont choisis dans le groupe constitué des genres Phytoseiulus, de préférence *Phytoseiulus persimilis, Phytoseiulus macropilis, Phytoseiulus longipes* ou *Phytoseiulus fragariae, et* genre *Amblyseius,* de préférence *Amblyseius swirskii, Amblyseius californicus, Amblyseius cucumeris, Amblyseius andersoni* et *Amblyseius montdorensis.*

Selon un mode de réalisation, lesdits agents de contrôle biologique vivants sont des insectes diptères, de préférence de la famille des *Cecidomyiidae* ou hyménoptères, de préférence des familles des *Brachonidae, Aphelinidae ou Trichogrammatidae.*

De préférence, lesdits agents de contrôle biologique de la famille des *Cecidomyiidae* sont choisis dans le groupe constitué de *Feltiella acarisuga* et *Aphidoletes aphidimyza.*

De préférence, lesdits agents de contrôle biologique de la famille des *Brachonidae* sont choisis dans le groupe constitué de *Aphidius colemani ; Aphidius ervi* , *Aphidius matricariae.*

De préférence, lesdits agents de contrôle biologique de la famille des *Aphelinidae* sont choisis dans le groupe constitué de *Aphelinus abdominalis, Encarsia formosa; Eretmocerus eremicus ; Eretmocerus mundus.*

Selon un mode de réalisation, lesdits agents de contrôle biologique vivants sont des nématodes de la famille des *Steinernematidae* ou de la famille des *Heterorhabditidae* ou de la famille des *Rhabditidae.*

De préférence, lesdits agents de contrôle biologique de la famille des *Steinernematidae* sont choisis dans le groupe constitué de *Steinernema carpocapsae ; Steinernema kraussei, Steinernema feltiae.*

De préférence, lesdits agents de contrôle biologique de la famille des *Heterorhabditidae* sont choisis dans le groupe constitué de *Heterorhabditis bacteriophora.*

De préférence, lesdits agents de contrôle biologique de la famille des *Rhabditidae* sont choisis dans le groupe constitué de *Phasmarhabditis bacteriophora.*

De préférence, lesdits agents de contrôle biologique sont présents dans la composition aqueuse sous forme de larves, nymphes, pupes et/ou adultes.

De préférence, lesdits agents de contrôle biologique sont présents dans la composition sous forme de tout stade de développement à l'exception des oeufs.

De préférence, le système 1 permet de maintenir au moins 60 %, de préférence au moins 70 %, de manière encore préférée au moins 80 %, de manière particulièrement préférée au moins 90 % des agents de contrôle biologique de la famille des phytoséides du genre Phytoseiulus vivants pendant au moins 2h, de préférence 6h, de manière encore préférée 12h.

De préférence, le système 1 permet de maintenir au moins 60 %, de préférence au moins 70 %, de manière encore préférée au moins 80 %, de manière particulièrement préférée au moins 90 % de la longévité témoin des agents de contrôle biologique de la famille des phytoséides du genre Phytoseiulus pendant au moins 2h, de préférence 6h, de manière encore préférée 12h.

La « *longévité témoin* » est définie comme une mortalité inférieure à 20% à 5 jours.

De préférence, le système 1 permet de maintenir au moins 60 %, de préférence au moins 70 %, de manière encore préférée au moins 80 %, de manière particulièrement préférée au moins 90 % de la fécondité témoin des agents de contrôle biologique de la famille des phytoséides du genre Phytoseiulus pendant au moins 2h, de préférence 6h, de manière encore préférée 12h.

La « *fécondité témoin »* est définie comme une fécondité supérieure ou égale à 10 oeufs/femelle/5 jours, notamment pour les agents de contrôle biologique de la famille des phytoséides du genre Phytoseiulus.

La composition permet, après sa dispersion ou pulvérisation en gouttes, un taux de sortie du gel des agents de contrôle biologique de la famille des phytoséides du genre Phytoseiulus vivants supérieur à 60 %, notamment supérieur à 80%.

### Les épaississants/gélifiants

Les épaississants/gélifiants appropriés et leur concentration pour préparer la composition aqueuse pulvérisable sont sélectionnés pour satisfaire au critère de viscosité décrit ci-dessus, pour permettre une dispersion de façon homogène dans la composition des agents de contrôle biologique, notamment de la famille des phytoséides du genre Phytoseiulus, et pour être non-toxiques pour les agents de contrôle biologique vivants.

*« Non-toxique »* signifie moins de 20 % d'agents de contrôle biologique morts au bout de 2h.

En outre, les épaississants/gélifiants appropriés pour préparer la composition sont sélectionnés pour n'être ni toxiques pour les plantes de culture visées, ni pour le consommateur desdites plantes ou sous-produits desdites plantes.

De préférence, les épaississants/gélifiants appropriés pour préparer la composition sont des épaississants/gélifiants alimentaires.

De manière plus préférée, les épaississants/gélifiants appropriés pour préparer la composition sont choisis dans le groupe constitué des :
- polyosides et osides. On peut citer dans cette famille à titre d'exemples : alginate, amidon de maïs modifié, amylopectine, carraghénanes, chitosan, dextrine, gomme de guar, gomme de xanthane, glycérol, gomme de konjac.
- sels de polyacrylate. On peut citer dans cette famille à titre d'exemples : Carbomer 940 (acide polyacrylique), Gel maker emu (polyacrylate de sodium).
- dérivés de la povidone. On peut citer dans cette famille à titre d'exemples : PVP (Polyvinylpyrrolidone).
- dérivés de la cellulose. On peut citer dans cette famille à titre d'exemples : Carboxyméthylcellulose, hydroxypropylcellulose.
- sels métalliques. On peut citer dans cette famille à titre d'exemples : Chlorure de calcium, chlorure de potassium, sulfate d'aluminium.

De préférence, lesdits épaississants/gélifiants sont utilisés dans la composition à une concentration comprise entre 0,5 et 200 g/L, de préférence entre 1 et 90 g/L, de préférence encore entre 2 et 40 g/L.

De manière plus préférée, les épaississants/gélifiants appropriés pour préparer la composition sont choisis dans le groupe constitué des polyosides et des osides.

De manière particulièrement préférée, lesdits polyosides et osides sont choisis dans le groupe constitué de l'amidon de maïs modifié, des carraghénanes, de la gomme xanthane et de la gomme de konjac.

De préférence, l'amidon de maïs modifié est utilisé à une concentration comprise entre 30 et 90 g/L, de préférence à 34 g/L.

De préférence, un gel d'amidon de maïs modifié est utilisé à une viscosité dynamique à gradient de vitesse nulle comprise entre 60 et 25 100 mPa.s, de préférence à 80 mPa.s.

De préférence, les carraghénanes sont utilisées à une concentration comprise entre 1 et 10 g/L, de préférence à 3 g/L.

De préférence, un gel de carraghénanes est utilisé à une viscosité dynamique à gradient de vitesse nulle comprise entre 1 et 4 900 mPa.s, de préférence à 2 mPa.s.

De préférence, la gomme xanthane est utilisée à une concentration comprise entre 0,5 et 5 g/L, de préférence à 2 g/L.

De préférence, un gel de gomme xanthane est utilisé à une viscosité dynamique à gradient de vitesse nulle comprise entre 7 et 1680 mPa.s, de préférence à 135 mPa.s.

De préférence, la gomme de konjac est utilisée à une concentration comprise entre 0,5 et 10 g/L, de préférence à 4 g/L.

De préférence, un gel de gomme de konjac est utilisé à une viscosité dynamique à gradient de vitesse nulle comprise entre 1 et 450 mPa.s, de préférence à 27 mPa.s.

### Les enzymes

La composition aqueuse peut en outre comprendre une enzyme capable de dégrader le gel préparé à partir d'un ou plusieurs épaississants et/ou gélifiants et d'une solution aqueuse à une concentration de l'enzyme dans la solution aqueuse permettant une dégradation totale dudit gel en moins de 10 minutes, de préférence en moins de 5 minutes, de manière encore préférée en moins de 2 minutes.

L'ajout de l'enzyme à la composition permet d'améliorer le taux de sortie du gel des agents de contrôle biologique vivants, notamment de la famille des phytoséides du genre *Phytoseiulus* vivants après dispersion ou pulvérisation de la composition.

De préférence, le taux de sortie d'une composition selon l'invention avec enzyme est supérieur à 80 %.

De préférence, l'enzyme est ajoutée en dernier à la composition selon l'invention, notamment après le gélifiant ou l'épaississant et après les agents de contrôle biologique vivants.

De préférence, l'enzyme est ajoutée à la composition aqueuse moins de 2 heures avant sa dispersion/pulvérisation, de préférence juste avant sa dispersion/pulvérisation.

Le système 1 comprend préférentiellement un réservoir d'enzymes 7 en phase liquide. Le réservoir d'enzymes 7 est relié fluidiquement à la conduite d'agents de contrôle biologique 8. Ainsi, lors de la dispersion des agents de contrôle biologique vivants, il est possible d'ajouter l'enzyme immédiatement avant la pulvérisation de la composition aqueuse, et ainsi d'éviter de dégrader les propriétés rhéologiques de la solution aqueuse avant la pulvérisation. De préférence, le réservoir d'enzymes 7 est relié à la conduite d'agents de contrôle biologique 8 par un mélangeur de fluides, adapté à mélanger des agents de contrôle biologique vivants en phase liquide et une solution d'enzymes. Le mélangeur peut être choisi parmi une trompe à eau qui permet une aspiration d'un liquide par le passage d'un autre liquide en mélangeant les deux liquides, et un système de jonction fluide. En variante, le mélangeur peut être agencé entre la buse 2 et la connexion fluidique reliant la conduite d'agents de contrôle biologique 8 et une conduite reliant au réservoir d'enzymes 7.

L'enzyme est bien entendu appropriée pour dégrader ledit épaississant/gélifiant de la composition.

Les conditions les plus favorables sont obtenues lorsque l'enzyme dégrade rapidement le gel puisque plus le gel est rapidement dégradé, plus les agents de contrôle biologique sont rapidement libérés.

L'homme du métier saura choisir la concentration de l'enzyme en fonction de son activité enzymatique, de la température optimale, des concentrations en épaississant et de la durée d'hydrolyse souhaitée.

De préférence, la concentration de l'enzyme est choisie pour dégrader 100 % du gel en moins de 12h, de préférence en moins de 6h, de manière encore préférée en moins de 2h, de manière particulièrement préférée en moins de 1 min.

Par exemple, on utilisera des enzymes :
- Hydrolysant les liaisons osidiques pour la famille des osides/polyosides.

Dans le cas de l'alginate, l'alginate lyase dégrade l'alginate par 6-élimination des liaisons osidique.

Dans le cas de l'amidon modifié de maïs, l'alpha-amylase hydrolyse les liaisons osidiques alpha (1,4). Par exemple, on utilise une alpha-amylase à une activité enzymatique de 800 FAU/g à 20°C, 1 FAU hydrolysant 17 mg d'amidon par minute. Pour dégrader 100 mL d'amidon de maïs modifié à 34 g/L en 1 minute, il faut 200 FAU soit 0.25g d'alpha-amylase. Pour une dégradation en deux heures, il faut 1.6 FAU soit 0.002 g d'alpha-amylase. Enfin, pour une dégradation en 12h, il faut 0.27 FAU soit 0.3mg d'alpha-amylase.

Dans le cas de l'amylopectine, l'alpha-amylase hydrolyse les liaisons osidiques alpha (1,4).

Dans le cas des dextrines, la glycose hydrolase limite dextrinase hydrolyse les liaisons osidiques alpha (1,6).

Dans le cas des carraghénanes, la k-carraghénase hydrolyse les liaisons osidiques alpha (1,4).

Dans le cas des gommes de Guar et de Xanthane, la bêta-mannanase hydrolyse de manière aléatoire les liaisons (1,4)-β-D-mannosidique. Pour la Gomme de Xathane, la xanthane lyase hydrolyse les liaisons beta-D-mannosyle-beta-D-1,4-glucuronosyle.

Dans le cas du chitosan, la chitosanase hydrolyse les liaisons osidiques beta (1,4) entre les résidus de D-glucosamine.

Dans le cas du konjac, l'endo-1,4 beta-mannanase hydrolyse les liaisons osidiques beta (1,4) des résidus glucomannane.
- Pour les dérivés de la cellulose :
   L'Endo-cellulase : brise la structure cristalline de la cellulose en chaînes polysaccharidiques.
   L'Exo-cellulase : coupe 2-4 unités aux terminaisons des chaînes polysaccharides.
   La β-glucosidase : hydrolyse les chaînes polysaccharidiques en monosaccharides.
   L'Oxidative cellulase : dépolymérise la cellulose
   La cellulose phosphorylase : dépolymérise la cellulose en utilisant des phosphates.

### Ecoulements fluides dans le système 1

Le système 1 peut comprendre des moyens de mise sous pression du réservoir d'agents de contrôle biologique 6 et/ou du réservoir d'enzymes 7. Les moyens de mise sous pression sont adaptés à entraîner un écoulement depuis le réservoir d'agents de contrôle biologique 6 et/ou depuis le réservoir d'enzymes 7 vers la sortie de phase liquide 15. Ainsi, il est possible de mettre en oeuvre des écoulements comprenant les agents de contrôle biologique vivants sans risquer de diminuer leur taux de survie. En effet, certaines pompes peuvent engendrer des blessures par pression mécanique et dégrader la survie des agents de contrôle biologique vivants.

De préférence, les moyens de mise sous pression sont mis en oeuvre par une conduite de mise sous pression 10 reliant la conduite d'air 4 sous pression et le réservoir d'agents de contrôle biologique 6, et/ou reliant la conduite d'air 4 sous pression et le réservoir d'enzymes 7. La conduite de mise sous pression 10 peut être dimensionnée de manière à mettre sous pression le réservoir d'agents de contrôle biologique 6 et/ou le réservoir d'enzymes 7 à une pression prédéterminée, en fonction de la pression de la source d'air 3. Ainsi, il est possible de déclencher simultanément l'écoulement d'air 17, l'écoulement de composition aqueuse et préférentiellement un écoulement d'enzymes en contrôlant uniquement la source d'air 3 sous pression.

Il est également possible d'utiliser des pompes de type péristaltique pour entraîner les solutions depuis le réservoir d'agents de contrôle biologique 6 et/ou depuis le réservoir d'enzymes 7 vers la sortie de phase liquide.

### Le procédé de préparation de la composition

Le procédé de préparation de la composition selon l'invention comprend les étapes suivantes :
- dissolution du ou des épaississants et/ou gélifiants dans une base aqueuse, de préférence dans l'eau, de préférence dans l'eau, jusqu'à formation d'un gel,
- ajout des agents de contrôle biologique, notamment de la famille des phytoséides du genre *Phytoseiulus,* et leur dispersion de façon homogène dans le gel, de préférence par un brassage léger de la solution,
- éventuellement ajout d'une enzyme capable de dégrader le gel à une concentration permettant une dégradation totale dudit gel en moins de 12 heures, de préférence en moins de 2h.

Ce procédé de préparation est réalisé de préférence entre 18°C et 25°C, de manière particulièrement préférée à 20°C.

Ce procédé de préparation est réalisé de préférence à une humidité relative supérieure à 30 %, de préférence 60 %.

### La méthode de dispersion de la composition aqueuse

Un aspect de l'invention est une méthode de dispersion d'agents de contrôle biologique vivants. La méthode comprend une étape de pulvérisation de la composition aqueuse d'agents de contrôle biologique vivants par un système selon un mode de réalisation de l'invention.

La méthode comprend une étape dans laquelle on entraîne un écoulement d'air 17 depuis la source d'air 4 sous pression jusqu'à l'embouchure de pulvérisation 13.

La méthode comprend également une étape dans laquelle on entraîne un écoulement d'une composition aqueuse comprenant les agents de contrôle biologique vivants en phase liquide jusqu'à l'embouchure de pulvérisation 13.

La méthode est mise en oeuvre de sorte qu'une vitesse moyenne de l'écoulement d'air 17 dans la conduite d'air 4 est adaptée à pulvériser la composition aqueuse par cisaillement de la composition aqueuse par l'écoulement d'air. De préférence, le rapport entre la vitesse moyenne de l'écoulement d'air dans la conduite d'air 4 et entre la vitesse moyenne de l'écoulement de composition aqueuse est supérieur à un rapport prédéterminé, au-dessus duquel la composition aqueuse peut-être pulvérisée par cisaillement par l'écoulement d'air 17. De préférence, la vitesse moyenne de l'écoulement d'air au niveau de l'embouchure 13, et préférentiellement au niveau de la ou des sorties d'air 16, présente une vitesse comprise entre 5 m/s et 30 m/s, notamment comprise entre 10 m/s et 25 m/s. De préférence, la vitesse moyenne de l'écoulement de composition aqueuse est comprise entre 1 m/s et 5 m/s, notamment comprise entre 1,5 m/s et 3 m/s. Ainsi, il est possible de pulvériser la composition aqueuse sans la cisailler par un matériau solide, ce qui permet de diminuer la contrainte mécanique exercée sur les agents de contrôle biologique à débit de composition aqueuse constant, et ainsi d'augmenter le taux de survie des agents de contrôle biologique vivants. En effet, la pulvérisation de la composition aqueuse par de l'air permet d'augmenter le taux de survie des agents de contrôle biologique vivants.

De préférence, la composition aqueuse est pulvérisée seulement par l'écoulement d'air principal 17 après être sortie de l'orifice 21. Ainsi, le taux de survie des agents de contrôle biologique vivant peut être augmenté par rapport au taux de survie des agents de contrôle biologique pulvérisés au moins en partie par un contact entre la composition aqueuse et l'orifice.

De préférence, les moyens de mise sous pression sont contrôlés de manière à imposer une pression strictement inférieure à 3 bar et préférentiellement strictement inférieure à 1 bar dans le réservoir d'agents de contrôle biologique 6, notamment inférieure à 0,5 bars, et préférentiellement inférieure à 0,3 bars. En effet, il a été constaté que le stockage des agents de contrôle biologique à une pression trop élevée, notamment supérieure à 3 bar, et notamment supérieure à 0,5 bars, augmente la mortalité des agents de contrôle biologique.

### Exemples

En référence à la figure 2, le taux de survie des agents de contrôle biologique vivant a été mesuré après pulvérisation de la composition aqueuse pour différents systèmes. La mesure (a), la mesure (b), la mesure (c) et la mesure (d) correspondent à des pulvérisations de la composition aqueuse par des buses entraînant la pulvérisation d'une composition par passage au travers d'un petit orifice avant la sortie de la composition à l'extérieur du système. La mesure (e) correspond à la pulvérisation de la composition aqueuse par une buse selon un mode de réalisation de l'invention. On observe que le taux de survie des agents de contrôle biologique vivants est significativement supérieur lors de la mesure (e), c'est-à-dire en utilisant un système selon un mode de réalisation de l'invention. En particulier, le taux de survie des agents de contrôle biologique vivants dispersés par un système 1 selon un mode de réalisation de l'invention est supérieur à 80 %.

En référence à la figure 3, une expérience a été menée en utilisant deux buses selon un mode de réalisation de l'invention.

Les mesures (f) et (h) ont été obtenues avec une première buse présentant un orifice de l'embouchure de pulvérisation de diamètre de 1,8 mm compris entre 1 mm et 1,5 mm. Cette première buse comprend deux sorties d'air placées de part et d'autre de l'orifice et présentant chacune un diamètre de 7 mm. La vitesse d'air en sortie est d'environ 20m/s.

Les mesures (g) et (i) ont été obtenues avec une deuxième buse présentant un orifice de l'embouchure de pulvérisation supérieure à 1,5 mm, et plus exactement égal à 2,2 mm. Cette deuxième buse comprend deux sorties d'air placées de part et d'autre de l'orifice et présentant chacune un diamètre de 8mm. La vitesse d'air en sortie est d'environ 20m/s.

Les mesures (f) et (g) ont été obtenues en utilisant une composition d'agents de contrôle biologique placés dans un gel comprenant un épaississant/gélifiant d'amidon de maïs modifié comprenant en outre des enzymes.

Les mesures (h) et ig) ont été obtenues en utilisant une composition d'agents de contrôle biologique placés dans un gel comprenant un épaississant/gélifiant de gomme de Xanthane sans enzyme.

Les résultats de l'expérience illustrée en figure 3 montrent notamment que le taux de survie des acariens est supérieur en utilisant la gomme de xanthane sans enzyme plutôt que l'amidon de maïs modifié avec des enzymes.

Pour les deux types de gel, la buse présentant un orifice de l'embouchure de pulvérisation plus grand diamètre permet d'atteindre un taux de survie supérieur.

## Revendications

1. Système (1) de dispersion d'agents de contrôle biologique vivants, le système comprenant :
- un réservoir d'agents de contrôle biologique (6) vivants en phase liquide,
- une source d'air (3) sous pression,
- une buse (2), la buse (2) étant reliée au réservoir d'agents de contrôle biologique (6) par une conduite d'agents de contrôle biologique (8), et à la source d'air (3) sous pression par une conduite d'air (4) sous pression, la buse (2) comprenant une embouchure (13) de pulvérisation,
la conduite d'agents de contrôle biologique (8) présentant une sortie de phase liquide (15) adaptée pour permettre à un jet de phase liquide (12) de sortir de l'embouchure (13) selon une direction principale (20), et la conduite d'air (4) sous pression présentant au moins une sortie d'air (16),
**caractérisé en ce que** l'embouchure comprend une paroi (19), la sortie de phase liquide (15) étant définie par un orifice (21) sur la paroi (19) de l'embouchure (13), la ou les sorties d'air (16) étant agencées sur la paroi (19) de l'embouchure (13), la forme de la paroi (19) étant configurée pour diriger un écoulement d'air principal (17) sortant de la ou des sorties d'air (16) de manière convergente vers le jet de phase liquide (12), l'écoulement d'air principal (17) présentant préférentiellement une symétrie axiale par rapport à la direction principale (20).

2. Système (1) selon la revendication 1, dans lequel la buse comprend au moins deux sorties d'air (16) agencées symétriquement par rapport à la direction principale (20), la forme de la paroi (19) étant configurée pour diriger un premier écoulement d'air sortant d'une des sorties d'air (16) vers le jet de phase liquide (12), et pour diriger un deuxième écoulement d'air sortant de l'autre sortie d'air (16) vers le jet de phase liquide (12), le premier écoulement d'air et le deuxième écoulement d'air étant symétriques par rapport à la direction principale (20).

3. Système (1) selon l'une des revendications précédentes, comprenant un réservoir d'enzymes (7) en phase liquide, le réservoir d'enzymes (7) étant relié fluidiquement à la conduite d'agents de contrôle biologique (8), préférentiellement par un mélangeur (9) adapté pour mélanger des agents de contrôle biologique vivants en phase liquide et une solution d'enzymes.

4. Système (1) selon l'une des revendications précédentes, comprenant des moyens de mise sous pression du réservoir d'agents de contrôle biologique (6) et/ou du réservoir d'enzymes (7), adaptés à entraîner un écoulement depuis le réservoir d'agents de contrôle biologique (6) et/ou depuis le réservoir d'enzymes (7) vers la sortie de phase liquide (15).

5. Système (1) selon la revendication 4, dans lequel les moyens de mise sous pression sont mis en oeuvre par une conduite de mise sous pression (10) reliant la conduite d'air (4) sous pression et le réservoir d'agents de contrôle biologique (6), et/ou reliant la conduite d'air (4) sous pression et le réservoir d'enzymes (7).

6. Système (1) selon l'une des revendications précédentes, dans lequel l'orifice (21) présente un diamètre supérieur à 1 mm, et préférentiellement supérieur à 1,5 mm.

7. Système (1) selon l'une des revendications précédentes, dans lequel le réservoir d'agents de contrôle biologique (6) comprend une composition aqueuse, et des agents de contrôle biologiques dispersés dans la composition aqueuse.

8. Système (1) selon la revendication 7, dans lequel la composition aqueuse comprend un gel préparé à partir d'un ou plusieurs épaississants et/ou gélifiants et d'une solution aqueuse, les agents de contrôle biologique vivants étant dispersés de façon homogène dans le gel, lesdits épaississants et/ou gélifiants étant non toxiques pour lesdits agents de contrôle biologique et ledit gel présentant une viscosité dynamique à gradient de vitesse nulle comprise entre 1 et 30 000 mPa.s.

9. Système (1) selon l'une des revendications précédentes, dans lequel les agents de contrôle biologique vivants sont mobiles.

10. Système (1) selon l'une des revendications précédentes, dans lequel les agents de contrôle biologique vivants sont choisis dans le groupe constitué d'acariens et/ou d'insectes prédateurs.

11. Système (1) selon la revendication précédente, dans lequel les agents de contrôle biologique vivants sont des acariens de la famille des phytoséides du genre *Phytoseiulus.*

12. Système selon la revendication 8, dans lequel les agents de contrôle biologique vivants sont des insectes de type *Chrysoperla* prédateurs d'insectes ravageurs.

13. Méthode de dispersion d'agents de contrôle biologique vivants, comprenant une étape de pulvérisation d'une composition aqueuse d'agents de contrôle biologique vivants par un système (1) selon l'une des revendications 1 à 12, dans laquelle on entraîne un écoulement d'air principal (17) depuis la source d'air (4) sous pression jusqu'à l'embouchure de pulvérisation (13), on entraîne un écoulement d'une composition aqueuse comprenant les agents de contrôle biologique vivants en phase liquide jusqu'à l'orifice (21), une vitesse moyenne de l'écoulement d'air (17) dans la conduite d'air (4) étant adaptée à pulvériser la composition aqueuse par cisaillement de la composition aqueuse par l'écoulement d'air.

14. Méthode de dispersion d'agents de contrôle biologique vivants selon la revendication précédente, dans laquelle la composition aqueuse comprenant les agents de contrôle biologique (18) est pulvérisée seulement par l'écoulement d'air principal après être sortie de l'orifice (21).

15. Méthode de dispersion d'agents de contrôle biologique vivants selon la revendication 13 ou 14, dans laquelle le système (1) comprend des moyens de mise sous pression du réservoir d'agents de contrôle biologique (6) adaptés à entraîner un écoulement depuis le réservoir d'agents de contrôle biologique (6) et/ou depuis le réservoir d'enzymes (7) vers la sortie de phase liquide (15), dans laquelle on contrôle les moyens de mise sous pression de manière à imposer une pression strictement inférieure à 3 bar dans le réservoir d'agents de contrôle biologique (6), et préférentiellement inférieure à 0,5 bars.

## Patentansprüche

1. System (1) zum Verteilen von lebenden biologischen Bekämpfungsmitteln, wobei das System umfasst:
- ein Reservoir (6) mit lebenden biologischen Bekämpfungsmitteln in flüssiger Phase,
- eine Druckluftquelle (3),
- eine Düse (2), wobei die Düse (2) über eine Leitung (8) für biologische Bekämpfungsmittel mit dem Reservoir (6) für biologische Bekämpfungsmittel und über eine Druckluftleitung (4) mit der Druckluftquelle (3) verbunden ist, wobei die Düse (2) eine Sprühmündung (13) umfasst,
wobei die Leitung (8) für biologische Bekämpfungsmittel einen Flüssigphasenauslass (15) aufweist, der geeignet ist, dass ein Flüssigphasenstrahl (12) aus der Mündung (13) in einer Hauptrichtung (20) austreten kann, und die Druckluftleitung (4) mindestens einen Luftauslass (16) aufweist,
**dadurch gekennzeichnet, dass** die Mündung eine Wand (19) umfasst, wobei der Flüssigphasenauslass (15) durch eine Öffnung (21) an der Wand (19) der Mündung (13) definiert ist, wobei der oder die Luftauslässe (16) an der Wand (19) der Mündung (13) eingerichtet sind, wobei die Form der Wand (19) ausgelegt ist, um einen Hauptluftstrom (17), der aus dem oder den Luftauslässen (16) austritt, konvergierend zum Flüssigphasenstrahl (12) auszurichten, wobei der Hauptluftstrom (17) vorzugsweise axialsymmetrisch in Bezug auf die Hauptrichtung (20) ist.

2. System (1) nach Anspruch 1, wobei die Düse mindestens zwei Luftauslässe (16) umfasst, die symmetrisch zur Hauptrichtung (20) eingerichtet sind, wobei die Form der Wand (19) ausgelegt ist, um einen ersten Luftstrom, der aus einem der Luftauslässe (16) austritt, in Richtung des Flüssigphasenstrahls (12) zu lenken, und um einen zweiten Luftstrom, der aus dem anderen Luftauslass (16) austritt, auf den Flüssigphasenstrahl (12) zu richten, wobei der erste Luftstrom und der zweite Luftstrom symmetrisch in Bezug auf die Hauptrichtung (20) sind.

3. System (1) nach einem der vorhergehenden Ansprüche, umfassend ein Flüssigphasen-Enzymreservoir (7), wobei das Enzymreservoir (7) fluidisch mit der Leitung (8) für biologische Bekämpfungsmittel verbunden ist, vorzugsweise durch einen Mischer (9), der zum Mischen von lebenden biologischen Bekämpfungsmitteln in flüssiger Phase und einer Enzymlösung geeignet ist.

4. System (1) nach einem der vorhergehenden Ansprüche, umfassend Mittel zur Druckbeaufschlagung des Reservoirs (6) für biologische Bekämpfungsmittel und/oder des Enzymreservoirs (7), die geeignet sind, einen Strom aus dem Reservoir (6) für biologische Bekämpfungsmittel und/oder aus dem Enzymreservoir (7) zum Flüssigphasenauslass (15) zu befördern.

5. System (1) nach Anspruch 4, wobei die Mittel zur Druckbeaufschlagung durch eine Druckbeaufschlagungsleitung (10) umgesetzt werden, die die Druckluftleitung (4) und das Reservoir (6) für biologische Bekämpfungsmittel verbindet und/oder die Druckluftleitung (4) und das Enzymreservoir (7) verbindet.

6. System (1) nach einem der vorhergehenden Ansprüche, wobei die Öffnung (21) einen Durchmesser von über 1 mm und vorzugsweise von über 1,5 mm aufweist.

7. System (1) nach einem der vorhergehenden Ansprüche, wobei das Reservoir (6) für biologische Bekämpfungsmittel eine wässrige Zusammensetzung und biologische Bekämpfungsmittel, die in der wässrigen Zusammensetzung verteilt sind, umfasst.

8. System (1) nach Anspruch 7, wobei die wässrige Zusammensetzung ein Gel umfasst, das aus einem oder mehreren Verdickungs- und/oder Geliermitteln und einer wässrigen Lösung hergestellt ist, wobei die lebenden biologischen Bekämpfungsmittel homogen in dem Gel verteilt sind, wobei die Verdickungs- und/oder Geliermittel für die biologischen Bekämpfungsmittel nicht toxisch sind und das Gel eine dynamische Viskosität bei einem Geschwindigkeitsgradienten von Null zwischen 1 und 30.000 mPa.s aufweist.

9. System (1) nach einem der vorhergehenden Ansprüche, wobei die lebenden biologischen Bekämpfungsmittel beweglich sind.

10. System (1) nach einem der vorhergehenden Ansprüche, wobei die lebenden biologischen Bekämpfungsmittel aus der Gruppe ausgewählt sind, die aus Milben und/oder räuberischen Insekten besteht.

11. System (1) nach vorhergehendem Anspruch, wobei die lebenden biologischen Bekämpfungsmittel Milben aus der Familie der Phytoseiden der Gattung *Phytoseiulus* sind.

12. System nach Anspruch 8, wobei die lebenden biologischen Bekämpfungsmittel Insekten des Typs *Chrysoperla* sind, die Schädlingsinsekten räubern.

13. Verfahren zum Verteilen lebender biologischer Bekämpfungsmittel, umfassend einen Schritt des Versprühens einer wässrigen Zusammensetzung lebender biologischer Bekämpfungsmittel durch ein System (1) nach einem der Ansprüche 1 bis 12, wobei ein Hauptluftstrom (17) von der Druckluftquelle (4) zur Sprühmündung (13) befördert wird, ein Strom einer wässrigen Zusammensetzung, die die lebenden biologischen Bekämpfungsmittel in flüssiger Phase umfasst, zu der Öffnung (21) befördert wird, wobei eine Durchschnittsgeschwindigkeit des Luftstroms (17) in der Luftleitung (4) geeignet ist, die wässrige Zusammensetzung durch Scherung der wässrigen Zusammensetzung durch den Luftstrom zu versprühen.

14. Verfahren zum Verteilen lebender biologischer Bekämpfungsmittel nach vorhergehendem Anspruch, wobei die wässrige Zusammensetzung, die die biologischen Bekämpfungsmittel (18) umfasst, nur durch den Hauptluftstrom versprüht wird, nachdem sie aus der Öffnung (21) ausgetreten ist.

15. Verfahren zum Verteilen lebender biologischer Bekämpfungsmittel nach Anspruch 13 oder 14, wobei das System (1) Mittel zur Druckbeaufschlagung des Reservoirs (6) für biologische Bekämpfungsmittel umfasst, die geeignet sind, einen Strom aus dem Reservoir (6) für biologische Bekämpfungsmittel und/oder aus dem Enzymreservoir (7) zum Flüssigphasenauslass (15) zu befördern, wobei die Druckbeaufschlagungsmittel so gesteuert werden, dass im Reservoir (6) für biologische Bekämpfungsmittel ein Druck von strikt unter 3 bar und vorzugsweise von unter 0,5 bar herrscht.

## Claims

1. A system (1) for dispersing living biological control agents,
the system comprising:
- a reservoir of living biological control agents (6) in liquid phase,
- a source of air (3) under pressure,
- a nozzle (2), the nozzle (2) being connected to the biological control agent reservoir (6) by a biological control agent line (8), and to the pressurized air source (3) by a pressurized air line (4), the nozzle (2) comprising a mouthpiece (13), the biological control agent line (8) having a liquid phase outlet (15) configured to allow a liquid phase jet (12) to exit the mouthpiece (13) in a main direction (20), and the pressurized air line (4) having at least one air outlet (16),
**characterized in that** the mouthpiece comprises
a wall (19),
the liquid phase outlet (15) being defined by an orifice (21) on the wall (19) of the mouthpiece (13), the air outlet(s) (16) being arranged on the wall (19) of the mouthpiece (13), the shape of the wall (19) being configured to direct a main air flow (17) exiting from the air outlet(s) (16) convergently towards the liquid phase jet (12), the main air flow (17) preferably being axially symmetrical with respect to the main direction (20).

2. System (1) according to claim 1, wherein the nozzle comprises at least two air outlets (16) arranged symmetrically with respect to the main direction (20), the shape of the wall (19) being configured to direct a first air flow exiting from one of the air outlets (16) towards the liquid phase jet (12), and to direct a second air flow exiting from the other air outlet (16) towards the liquid phase jet (12), the first air flow and the second air flow being symmetrical with respect to the main direction (20).

3. System (1) according to one of the preceding claims, comprising an enzyme reservoir (7) in liquid phase, the enzyme reservoir (7) being fluidically connected to the biological control agent line (8), preferably via a mixer (9) configured to mix liquid-phase living biological control agents and an enzyme solution.

4. A system (1) according to any of the preceding claims, comprising means for pressurizing the biological control agent reservoir (6) and/or the enzyme reservoir (7), configured to cause a flow from the biological control agent reservoir (6) and/or from the enzyme reservoir (7) to the liquid phase outlet (15).

5. System (1) according to claim 4, wherein the pressurizing means are implemented by a pressurizing line (10) connecting the pressurized air line (4) and the biological control agent reservoir (6), and/or connecting the pressurized air line (4) and the enzyme reservoir (7).

6. System (1) according to one of the preceding claims, wherein the orifice (21) has a diameter greater than 1 mm, and preferably greater than 1.5 mm.

7. A system (1) according to any of the preceding claims, wherein the biological control agent reservoir (6) comprises an aqueous composition, and biological control agents dispersed in the aqueous composition.

8. A system (1) according to claim 7, wherein the aqueous composition comprises a gel prepared from one or more thickeners and/or gelling agents and an aqueous solution, the living biological control agents being homogeneously dispersed in the gel, said thickeners and/or gelling agents being non-toxic to said biological control agents and said gel exhibiting a zero-velocity gradient dynamic viscosity of between 1 and 30,000 mPa.s.

9. System (1) according to one of the preceding claims, in which the living biological control agents are mobile.

10. System (1) according to one of the preceding claims, wherein the living biological control agents are selected from the group consisting of mites and/or predatory insects.

11. System (1) according to the preceding claim, wherein the living biological control agents are mites of the phytoseiid family of the genus *Phytoseiulus.*

12. System according to claim 8, in which the living biological control agents are insects of the *Chrysoperla* type which predate insect pests.

13. A method of dispersing live biological control agents, comprising a step of spraying an aqueous composition of live biological control agents through a system (1) according to any one of claims 1 to 12, wherein a main air flow (17) is driven from the pressurized air line (4) under pressure to the mouthpiece (13), a flow of an aqueous composition comprising the living biological control agents in liquid phase is driven to the orifice (21), an average velocity of the main air flow (17) in the pressurized air line (4) being configured to spray the aqueous composition by shearing of the aqueous composition by the air flow.

14. A method of dispersing living biological control agents according to the preceding claim, wherein the aqueous composition comprising the biological control agents (18) is sprayed only by the main air flow after exiting from the orifice (21).

15. A method of dispersing live biological control agents according to claim 13 or 14, wherein the system (1) comprises biological control agent reservoir pressurizing means configured to cause a flow from the biological control agent reservoir (6) and/or from the enzyme reservoir (7) to the liquid phase outlet (15), wherein the pressurizing means is controlled so as to impose a pressure strictly below 3 bar in the biological control agent reservoir (6), and preferably below 0.5 bar.
